# EUROPÄISCHE PATENTANMELDUNG

(11) **EP 4 431 761 A1**
(43) Veröffentlichungstag der Anmeldung: **18.09.2024**
(21) Anmeldenummer: 23162628.4
(22) Anmeldetag: 17.03.2023
(51) Int. Cl.: F16F 15/023, F16C 27/04

(54) **QUETSCHÖLDÄMPFER**

(71) Anmelder: Siemens Aktiengesellschaft, 80333 München (DE); Gleitlagertechnik Weißbacher GmbH, 46519 Alpen (DE)
(72) Erfinder: Die Erfindernennung liegt noch nicht vor
(74) Vertreter: Siemens Patent Attorneys

(57) **Zusammenfassung**

Ein Quetschöldämpfer (10), weist einen Innenring (11) und einen Außenring (12) auf, wobei der Innenring (11) und der Au-ßenring (12) zueinander verspannbar sind und/oder variabel positionierbar sind. Es sind Stäbe (13,14,15,16,17,18,19) zur Verbindung des Innenrings (11) mit dem Außenring (12) vorgesehen, wobei der Innenring (11) zum Außenring (12) durch die Stäbe (13,14,15,16,17,18,19) insbesondere axial verspannt ist. In einem Verfahren zur Erstellung eines Quetschöldämpfers (10), werden Elemente des Quetschöldämpfers (10) verspannt bzw. positioniert, wobei ein erstes Element ein Innenring (11) ist und ein zweites Element ein Außenring (12) ist.

## Beschreibung

Die Erfindung betrifft einen Quetschöldämpfer und ein Verfahren zur Erstellung bzw. zum Betrieb eines Quetschöldämpfers, wobei der Quetschöldämpfer insbesondere bei einem Lager verwendet wird.

Quetschöldämpfer werden beispielsweise bei elektrischen Maschinen eingesetzt. Elektrische Maschinen sind beispielsweise Motoren oder Generatoren. Durch einen Quetschöldämpfer, welcher insbesondere in Zusammenspiel mit einem Lager der elektrischen Maschine zum Einsatz kommt, kann die rotordynamische Auslegung einer rotierenden elektrischen Maschine beeinflusst werden. Insbesondere bei schnelldrehenden Maschinen, also schnelldrehenden elektrischen Maschinen wie schnelldrehenden Motoren, ist im Rahmen der rotordynamischen Maschinenauslegung mit dem Auftreten von Eigenfrequenzen des Rotor-Lager-Systems im Betriebsbereich zu rechnen bzw. sind diese zu berücksichtigen, was zu Einschränkungen im Betrieb der Maschinen führen kann, da der Betrieb in oder nahe bei Eigenfrequenzen potentiell große Schwingungsamplituden hervorruft, was wiederum im Allgemeinen per Normung oder aufgrund der zu gewährleistenden Betriebssicherheitsaspekte unerwünscht ist. Können Schwingungen nicht ausreichend verhindert oder gedämpft werden, sind die Maschinen nur in einem eingeschränkten Betriebsdrehzahlbereichen nutzbar. Die rotordynamische Auslegung erfolgt beispielsweise spezifisch für die Anforderungen an den Betriebsdrehzahlbereich aus einem spezifischen Projekt bzw. Anwendung. Soll dieser Betriebsdrehzahlbereich angepasst (verschoben oder erweitert) werden, ist eine neuerliche Abstimmung des dynamischen Systems aus Rotor, Gleitlager und Support erforderlich. Damit hängen große Zeit- und Ressourcenaufwände zusammen, die bereits im Angebotsfall durchlaufen werden müssen, was die Dauer der Angebotsbearbeitung erheblich verlängert und nachteilig ist. Darüber hinaus ist z.B. ein Rotor-Lager-System einer elektrischen Maschine mit einem Rotor und einem Stator nicht in dem Maße mit konventionellen Gleitlagern optimierbar, dass eine große Robustheit gegenüber Veränderungen des Betriebsdrehzahlbereiches erzielt werden kann. Die Folge davon können zusätzliche projekt- und/oder anwendungsspezifischen Auslegungsdurchläufe sein. Mit einem Quetschöldämpfer kann das Rotor-Lager-System verbessert werden. Das Lager ist beispielsweise ein Kugellager.

Aus der US 4 453 783 A ist eine Lagerstützstruktur bekannt, bei der sich der äußere Lagerring in einem Stützring befindet, der von einem äußeren Dämpferring umgeben ist, um dazwischen einen Öldämpferraum zu bilden. An einem Ende des Stützrings befindet sich ein vorstehender Flansch, an dem jeweils ein Ende eines Rings aus Stangen befestigt ist. Dieser Stangenring umgibt den äußeren Dämpferring und ist am anderen Ende der Stangen am entfernten Ende des äußeren Dämpferrings befestigt. Das innere Ende des Dämpferrings wird von einem Befestigungsflansch durch ein kegelstumpfförmiges Element getragen, das durchgehende Löcher für die Stäbe aufweist.

Aus der US 9 890 810 B2 ist ein Quetschfilmdämpfer bekannt, welcher ein Lagergehäuse als einen inneren Ring umfasst, der um eine radial äußere Seite eines Lagers angeordnet ist, das eine Drehwelle drehbar lagert. Ferner gibt es einen äußeren Ring, der um eine radial äußere Seite des Lagergehäuses angeordnet ist, einen Quetschfilm, der durch Zirkulieren eines viskosen Materials gebildet wird, mit Fluid durch einen Zwischenraum in einer radialen Richtung zwischen dem Lagergehäuse und dem Außenring, und einen Kopplungsstift, der das Lagergehäuse und den Außenring miteinander koppelt. Der Kopplungsstift hat eine Steifigkeit, die in einer vertikalen Richtung höher ist als in einer horizontalen Richtung in einem Querschnitt senkrecht zu einer axialen Richtung der Drehwelle.

Eine Aufgabe der Erfindung ist es einen Quetschöldämpfer zu verbessern.

Eine Lösung der Aufgabe ergibt sich bei einem Quetschöldämpfer nach Anspruch 1, bzw. bei einem Verfahren nach Anspruch 13. Weitere Ausgestaltungen ergeben sich beispielsweise gemäß der Ansprüche 2 bis 12, 14 und 15. Merkmale dieser Ausgestaltungen bzw. weitere im folgenden beschriebenen Ausgestaltungen können auch untereinander kombiniert werden.

Ein Quetschöldämpfer weist einen Innenring und einen Außenring auf, wobei der Innenring und der Außenring zueinander verspannbar sind, also insbesondere zueinander verspannt sind und/oder variabel positionierbar sind. Die variable Positionierbarkeit betrifft die Positionierung von Innenring und Au-βenring zueinander. Diese Positionierung betrifft beispielsweise eine axiale Positionierung und/oder eine radiale Positionierung. Bei einem Quetschöldämpfer können folglich Innenring und Außenring zueinander verspannt sein bzw. werden und/oder variabel positioniert sein bzw. werden. Die Verspannung und/oder Positionierung wird insbesondere durch eine Verschränkung von Elementen zur Verspannung und/oder Positionierung erreicht. Der Innenring oder der Außenring können insbesondere ein Lager aufnehmen, wobei das Lager insbesondere ein Lager einer elektrischen Maschine ist. Die elektrische Maschine ist beispielsweise eine schnell drehende elektrische Maschine mit einer Drehzahl von 1000 bis 30000 U/min. Durch die Möglichkeit der Verspannung bzw. Positionierung ist es möglich einen Betriebsdrehzahlbereich einer Maschine (elektrischen Maschine) anzupassen. Soll der Betriebsdrehzahlbereich angepasst (verschoben oder erweitert) werden, ist eine neuerliche Abstimmung des dynamischen Systems aus Rotor, Gleitlager und Support erforderlich. Dies kann nun durch die Veränderung der Verspannung und/oder Positionierung geschehen. Sind der Innenring und der Außenring zueinander positioniert, so kann diese Position derart ausgeführt sein, dass die Ringe zueinander spannungsfrei sind oder zueinander verspannt sind.

In einer Ausgestaltung des Quetschöldämpfer sind Stäbe zur Verbindung des Innenrings mit dem Außenring vorgesehen, wobei der Innenring zum Außenring durch die Stäbe insbesondere axial verspannt ist, bzw. verspannbar ist und/oder positioniert ist, bzw. variabel positionierbar ist. Unterschiedliche und/oder gleiche Stäbe können beispielsweise einen unterschiedlichen und/oder gleichen Querschnitt haben. Querschnitte sind beispielsweise rund, eckig oder oval. Durch die Stäbe kann sich eine Federwirkung ergeben. Ein Stab ist also eine Art Federelement und kann somit auch als ein Federstab bzw. als ein Federelement bezeichnet werden. Ein Stab ist zudem insbesondere ein Element zum Erreichen einer Verspannung bzw. Positionierung, insbesondere einer verschränkten Verspannung bzw. Positionierung, von Innenring und Außenring. Bei einer Vorspannung der Stäbe werden diese insbesondere auf Zug beansprucht bzw. vorgespannt. Damit kann die Steifigkeit der Verbindung zwischen Innenring und Außenring des Quetschöldämpfers verändert werden.

In einer Ausgestaltung des Quetschöldämpfers sind der Innenring und/oder der Außenring ein offener Ring und/oder ein geschlossener Ring, wobei insbesondere offene Ringe zu einem geschlossenen Ring fügbar sind. Der Quetschöldämpfer ist also beispielsweise in zwei Halbringe segmentiert. Diese Segmente können zu einem geschlossenen Ring gefügt werden. Die Segmente sind beispielsweise miteinander verschraubt. Durch die Segmentierung ist es beispielsweise möglich, ein Lager in den Quetschöldämpfer zu integrieren. Der Quetschöldämpfer umfasst beispielsweise ganz oder teilweise das Lager, welches beispielsweise ein Gleitlager oder ein Wälzlager ist. Der Quetschöldämpfer kann beispielsweise zusammen mit dem Lager in ein Lagergehäuse positioniert sein. In einer derartigen Ausgestaltung wird der Quetschöldämpfer Teil eines Lagers. Allgemein betrifft die Erfindung damit nicht nur einen Quetschöldämpfer, sondern auch ein Lager (z.B. ein Wälzlager oder ein Gleitlager) mit einem Quetschöldämpfer.

In einer Ausgestaltung des Quetschöldämpfers ist der Innenring und/oder der Außenring teilbar bzw. geteilt. Damit kann insbesondere eine Integration in ein Lager und oder die Verbindung mit einem Lager konstruktiv erleichtert werden. Der Innenring bzw. der Außenring kann einen unteren und einen oberen Teilkreis aufweisen, wobei der untere und der obere Teilkreis zusammengefügt einen Gesamtpreis ausbilden. Der untere Teilkreis ist der Teil, welcher einer Befestigung des Lagers bzw. des Lagergehäuses bzw. der elektrischen Maschine auf einem Fundament (dies ist ein Beispiel für einen Support bzw. Unterbau) oder dergleichen zugewandt ist. Der obere Teilkreis ist entsprechend der einer derartigen Befestigung abgewandte Teil.

In einer Ausgestaltung des Quetschöldämpfers ist eine erste Anzahl von Stäben dafür vorgesehen den Außenring in eine erste axiale Zugrichtung ziehen zu können und eine zweite Anzahl von Stäben dafür vorgesehen den Außenring in eine zweite axiale Zugrichtung ziehen zu können, wobei sich Stäbe und oder Gruppen von Stäben unterschiedlicher potentieller Zugrichtungen abwechseln. Durch dieses Abwechseln ergibt sich eine Verschränkung. Die Zugrichtungen sind insbesondere entgegengesetzt und zusätzlich achsparallel zu einer Rotationsachse der elektrischen Maschine bzw. achsparallel zur Rotationsachse des Lagers. Die Stäbe können mit Ihrer Federwirkung eine Art Federkäfig ausbilden. Die Stäbe können ferner kreisförmig und achsparallel zur Lagerachse positioniert sein. So ist es möglich einen Quetschöldämpfer mit verschränktem Federkäfig mit vorgespannten Federelementen und/oder variabler Steifigkeit zu realisieren, wobei dieser insbesondere mit seiner Bauweise in ein Lagergehäuse integriert ist, bzw. ein Lager, wie ein Gleitlager integriert, also insbesondere ganz oder teilweise umgibt. Durch die Verschränkung der Verbindung zwischen Innenring und Außenring ist es möglich geringe innere Zwangskräfte und damit eine möglichst ideale radiale Führung der Ringe zueinander ohne Verkippung zu realisieren. Unterschiedliche zumindest potentielle Zugrichtungen zwischen Innenring und Außenring, welche durch die Verschränkung erreicht werden, können ein Kippen von Innenring zu Außenring verhindern. Eine Übertragung von Axialkräften ist insbesondere formschlüssig möglich.

In einer Ausgestaltung des Quetschöldämpfers weisen die Stäbe eine Oberflächenschicht auf, wobei diese aus einer Oberflächenbeschichtung und/oder aus einer Oberflächenbehandlung resultiert. Die Oberflächenschicht ergibt sich beispielsweise durch eine Nitrocarburierung eines Grundkörpers für den Stab aus dem Material 42CrMo4. Dies stellt eine hinreichende Freßsicherheit bei einem wiederholten Fügen von Stäben und Ringen, also dem Außenring bzw. dem Innenring sicher.

In einer Ausgestaltung des Quetschöldämpfers weisen die Stäbe unterschiedliche Materialien auf.

In einer Ausgestaltung des Quetschöldämpfers weisen die Stäbe ein Material mit höherer Biegewechselfestigkeit auf, als das Material, welches zur Ausbildung der Ringe Verwendung findet.

In einer Ausgestaltung des Quetschöldämpfers weist der Innenring ein U-förmiges Profil auf, wobei der Außenring zumindest teilweise in das Profil ragt. In einer weiteren Ausgestaltung des Quetschöldämpfers weist der Außenring ein U-förmiges Profil auf, wobei der Innenring zumindest teilweise in das Profil ragt. Das Profil ergibt sich dabei aus aufeinander folgenden Querschnitten. Ein erster Querschnitt eines Ringes weist z.B. eine erste L-Form auf und ein nachfolgender zweiter Querschnitt des Ringes weist eine gespiegelte zweite L-Form auf. Durch die Spiegelung ergibt sich also aus praktisch zwei aufeinander gelegten L-Formen eine U-Form. Die U-Form eines Ringes ergibt sich nicht unbedingt durch einen einzelnen Querschnitt, sondern durch eine Aneinanderschau aufeinander folgender Querschnitte eines Ringes in einer Art Schattenwurf. Diese Abfolge der unterschiedlichen Querschnitte macht die Verschränkung möglich.

So kann eine kompakte Bauweise erzielt werden. Ferner ist so eine Verspannung, wie auch eine Positionierung, von Innenring zu Außenring bzw. umgekehrt in einfacher Weise möglich.

Der Innenring weist in einer Ausführungsform insbesondere axiale Stirnseiten auf. Stirnseitig weist der Innenring jeweils einen gezahnten Flansch auf. Die Zahnung ist radial nach außen gerichtet. Die einzelnen Zähne sind über den Umfang des kreisförmigen Flansches verteilt. Durch die Zahnung kann sich der L-förmige Querschnitt eines Ringes ergeben. Die Zahnung auf einer der Stirnseiten ist zur Zahnung auf der anderen Stirnseite in ihrer Kreisposition versetzt. Die Zahnung weist Löcher auf, wobei in ein Loch jeweils ein Stab durchgeführt ist. Der Stab ist ferner durch ein Loch im Außenring geführt. Der Außenring weist eine Vielzahl von Löchern zur Durchführung von Stäben auf, wobei die Löcher achsparallel verlaufen. Dadurch, dass die Zahnungen auf den Stirnseiten versetzt sind, wird in Bereichen der Zahnung auf einer ersten Stirnseite durch die Stäbe der Innenring zum Außenring, bzw. umgekehrt, in einer ersten axialen Richtung gezogen bzw. positioniert. Und ebenso wird dadurch, dass die Zahnungen auf den Stirnseiten versetzt sind, in Bereichen der Zahnungen auf der zweiten Stirnseite durch die Stäbe der Innenring zum Außenring, bzw. umgekehrt, in einer zweiten axialen Richtung gezogen bzw. positioniert, welche der ersten axialen Richtung entgegengesetzt ist. Damit wird eine Verschränkung erreicht, wie auch insbesondere eine Verspannung von Innenring zu Au-βenring.

In einer Ausgestaltung können einzelne Stäbe oder Gruppen von Stäben wechselseitig von links bzw. rechts (also jeweils von der anderen Stirnseite) in den Innenring und/oder den Außenring eingeschoben werden bzw. eingeschoben sein. Durch diese Wechselseitigkeit ist ein verschränkter Federkäfig ausbildbar. Der Außenring kann also bezüglich des Innenrings verspannt bzw. positioniert werden, da der Außenring wechselseitig über Kreissektoren (Teilkreise) axial parallel in entgegengesetzte Richtungen gezogen bzw. positioniert wird. Die Positionierung, insbesondere axiale Positionierung, kann variabel erfolgen, da die wirksame Länge der Stäbe durch Muttern verkürzt oder verlängert werden kann, wenn die Stäbe als Schrauben ausgeführt sind. In einer Ausgestaltung von Stäben, welche eine Federwirkung aufweisen, weist der Stab eine federwirksame Länge auf, wobei die federwirksame Länge unabhängig von der positionsabhängigen wirksamen Länge des Stabes gleich bleibt.

In einer Ausgestaltung des Quetschöldämpfers ist das Lager vom Quetschöldämpfer umfasst. Das Lager, welches insbesondere ein Gleitlager ist, kann beispielsweise mit dem Innenring verschraubt oder in diesen eingepresst sein.

In einer Ausgestaltung des Quetschöldämpfers ist in diesem Quetschöldämpfer also ein Lager vorgesehen, wobei das Lager insbesondere ein Gleitlager ist und das Lager insbesondere den Rotor einer elektrischen Maschine lagert.

In einer Ausgestaltung des Quetschöldämpfers ist der Quetschöldämpfer in ein Lagergehäuse integriert bzw. integrierbar. Damit ist eine kompakte Bauweise realisierbar.

In einer Ausgestaltung des Quetschöldämpfers ist die Verspannung und/oder Positionierung von Innenring und Außenring anpassbar. Dies gelingt beispielsweise, indem der Zug auf die Stäbe verändert wird bzw. die wirksame Länge der Stäbe verändert wird. Weisen die Stäbe beispielsweise eine Schraubverbindung auf, so kann der Zug auf der Schraube verändert werden. In einer weiteren Ausgestaltung können zur Anpassung der Verspannung auch unterschiedliche Stäbe verwendet werden bzw. ein oder mehrere Stäbe durch einen oder andere Stäbe ersetzt werden (getauscht werden), welche insbesondere ein anderes Material und/oder eine andere Form aufweisen. So kann beispielsweise ein in der Form oder Größe anderer Querschnitt für den oder die Stäbe gewählt werden.

In einer Ausgestaltung des Quetschöldämpfers ist zumindest ein Stab austauschbar und/oder ein Stab weist zumindest eine unterschiedliche Federwirkung auf. Dadurch kann beispielsweise das Frequenzverhalten einer elektrischen Maschine positiv beeinflusst werden, da der Frequenzbereich, in welchem keine Eigenschwingungen auftreten, vergrößert bzw. angepasst werden kann.

Nach einem Verfahren zur Erstellung eines Quetschöldämpfers, werden Elemente des Quetschöldämpfers verspannt und/oder variabel positioniert, wobei ein erstes Element ein Innenring ist und ein zweites Element ein Außenring ist. Zur Verspannung bzw. Positionierung können Stäbe verwendet werden. Zur Veränderung der Verspannung können die Stäbe in ihrer Zugbelastung verändert werden. Weiterhin können zur Veränderung der Verspannung Stäbe ausgetauscht werden, wobei sich die neuen Stäbe von den ausgetauschten Stäben unterscheiden. Der Unterschied betrifft insbesondere die Federeigenschaften des jeweiligen ausgetauschten Stabes. Zur Positionierung kann die wirksame Länge eines Stabes verändert werden.

In einer Ausgestaltung des Verfahrens wird also zur Veränderung einer Federwirkung und/oder einer Position zumindest ein Stab ausgetauscht und/oder zumindest bei einem Stab eine Vorspannung verändert und/oder eine wirksame Länge eines Stabes verändert. Die wirksame Länge eines Stabes wird bei einer Ausführung als eine Art Schraube durch die Position einer Mutter bestimmt. Anteile des Stabes welche über die Mutter hinaus stehen sind nicht wirksam.

In einer Ausgestaltung des Verfahrens wird ein Quetschöldämpfer in einer der beschriebenen Arten verwendet.

Durch den beschriebenen Quetschöldämpfer kann beispielsweise eine hydrodynamische Gleitlagerung beibehalten bzw. verbessert werden. Derartige Lagerungen finden beispielsweise bei elektrischen Maschinen Anwendung. Die hydrodynamische Gleitlagerung wird als eine Lagerungsart zwischen rotierenden und stehenden Komponenten eines Systems, wie einer elektrischen Maschine, beibehalten bzw. ergänzt. Zusätzlich wird ein weiteres Lager in die stehenden Komponenten eingefügt, der Quetschöldämpfer. Der Quetschöldämpfer kann also als eine Lagerung eines Lagers, nämlich eines rotierenden Lagers, für eine elektrische Maschine verstanden werden. Mittels des beschriebenen Quetschöldämpfers kann eine verbesserte Entkopplung eines Rotor-Lager-Systems vom Support, also z.B. dem Fundament zur Aufstellung der elektrischen Maschine, und eine Verringerung des Einflusses der Ölfilmkoeffizienten erreicht werden. Beispiele für einen Support ist neben einem Fundament ein Maschinengestell, ein Maschinengehäuse, etc.

Die Eigenfrequenzen des Rotor-Lager-Systems hängen beim Einsatz konventioneller Gleitlager maßgeblich von den drehzahlabhängigen Ölfilmkoeffizienten ab. Beim zusätzlichen Einsatz eines Quetschöldämpfers wird der Rotor-Support erheblich weicher gestaltet, wodurch physikalisch nur noch eine schwache Kopplung zwischen Rotor und Support entsteht. Aufgrund dieser schwachen Kopplung tritt der Einfluss der Ölfilmkoeffizienten darüber hinaus in den Hintergrund. Der Rotor verhält sich zunehmend wie in "frei-frei"-Lagerung. Durch diese Lagerungsart können große Abstände zwischen den Eigenfrequenzen erzielt werden, welche nunmehr auch unabhängig von der Betriebsdrehzahl und den damit verbundenen Ölfilmkoeffizienten sind. Durch die Stäbe des Quetschöldämpfers kann eine zusätzliche Dämpfungskomponente und/oder Federkomponente eingeführt werden. Der Quetschöldämpfer kann physikalisch gesehen als ein Feder-Dämpfer-System angesehen werden. Dieses ermöglicht neben der Entkopplung eines Rotor-Gleitlager-Systems zusätzlich die Dämpfung auftretender Eigenfrequenzen, was dem Betriebsverhalten rotierender Maschinen zuträglich sein kann.

Der Einsatz eines metallischen Federkäfigs bei Quetschöldämpfern kann eine Vergrößerung des axialen Bauraums notwendig machen. Dies kann beim vorgeschlagenen Quetschöldämpfer durch den erzielbaren geringen axialen Bauraum des Quetschöldämpfers vermieden werden. Beim beschriebenen Quetschöldämpfer werden die Stäbe (Stabfedern) wechselseitig von links bzw. rechts eingeschoben - es entsteht ein verschränkter Federkäfig. Diese Anordnung dient insbesondere dazu, dass das Lager nicht axial länger gestaltet werden braucht. Eine axial längere Bauform führt im Allgemeinen zu einer Verschlechterung der Rotordynamik und höherem Materialeinsatz. Darüber hinaus kann die verschränkte Anordnung der Stabfedern die vorteilhafte Eigenschaft mit sich bringen, dass sich eine rein radiale Bewegung ohne eine Verkippung des Lagerträgers einstellt.

In einer Ausgestaltung des Quetschöldämpfers bzw. in einer Ausgestaltung des Verfahrens kann der Quetschöldämpfer zentriert werden. Dies stellt eine Positionierung dar. Durch eine gezielte Vorspannung der Stäbe (Stabfedern), die durch einen Offset von unterem und oberen Teilkreis erzeugt wird, kann die gewichtskraftbedingte Einfederung des Federkäfigs vermieden bzw. kompensiert werden, was sich positiv auf die dann linearen Eigenschaften des Quetschöldämpfers auswirken kann.

In einer Ausgestaltung des Quetschöldämpfers bzw. in einer Ausgestaltung des Verfahrens ergibt sich eine Einstellbarkeit der Federelemente also der Stäbe, wobei die Federelemente, also die Stabfedern, unter verschiedenen Aspekten (einzeln oder gemeinsam) eine erhöhte Variabilität bieten:
- durch Anpassung ihrer Anzahl, des Durchmessers und/oder ihrer Kontur sind diese sehr einfach in ihrer Steifigkeit modifizierbar und bleiben dabei gut in ihren Eigenschaften prognostizierbar,
- das Design des Systems sieht insbesondere durch die Stirnseitige Montage eine Demontierbarkeit der Stabfedern vor, wodurch sich der Vorteil ergibt, dass diese gegen andere Federn im Bedarfsfall ausgetauscht werden können bzw. wenn sich die Betriebsbedingungen der Maschine geändert haben oder auf eine unbekannte Störung im System, die vorher nicht bekannt war, reagiert werden kann,
- Durch die Ausführung als separates, demontierbares Bauelement können für die Federn unterschiedliche Materialien (z.B. Federstahl, 50CrV4, 51CrV4, 100Cr6, 51CrMoV4, 100CrV4) und unterschiedliche Fertigungsmethoden (z.B. Schleifen, Härten, Vergüten, Kugelstrahlen) verwendet werden, die sich besonders für den Einsatz bei Federn eignen; Damit lässt sich eine bessere Materialausnutzung und eine geringere Baugröße der Federn realisieren.

Mithilfe des beschriebenen Quetschöldämpfers kann eine Steigerung der Robustheit der rotordynamischen Auslegung der Maschinen und damit ein erheblich verbesserter Einsatzbereich bei gleichzeitig geringerem Auslegungsaufwand erzielt werden. Es ist eine platzsparende Anordnung des Federkäfigs in einem Standard-Lagereinsatz ohne zusätzlichen axialen Bauraum möglich. Insbesondere ist auch eine variable Federsteifigkeit im Federkäfig durch eine Demontier- und Austauschbarkeit der Federn möglich.

In einer Ausgestaltung des Quetschöldämpfers ist durch die Stäbe eine Art Federkäfig ausgebildet, welcher Stabfedern aufweist, die mit ihrer Achse parallel um die rotierende Wellenachse angeordnet sind. Die Stabfedern können eine radiale wie auch axiale Steifigkeit ausbilden. Die Stäbe sind austauschbar. Sie können mit einem üblichen Wartungsaufwand für die Lager getauscht werden, ohne dass eine ganze Maschine zerlegt werden muss.

In einer Ausgestaltung des Quetschöldämpfers weist dieser zumindest eine der folgenden Funktionen bzw. Merkmale, insbesondere bezüglich des auch durch die Stäbe ausgebildeten Käfigs, auf:
- eine radiale Verbindung mit einstellbarer Steifigkeit von Außen- und Innenring des Quetschöldämpfers durch Stabfedern, insbesondere für
   o eine Zentrierung von Außen- und Innenring und/oder eine Einstellung eines möglichst gleichmäßigen Spalts am gesamten Umfang durch gezieltes Vorspannen einzelner Stabfedern,
   o eine radiale Abstützung zur statischen und dynamischen Kraftleitung und/oder
   o eine axiale Abstützung und/oder Positionierung der Teile zueinander;
- Stabfedern mit lösbaren Verbindungsmitteln/-methoden in Innen- und Außenring montiert, wobei mittels einer gewählten Materialpaarung (z.B. 51CrV4 und C10) und/oder einer vorgesehenen Oberflächenschicht auf den Federn, die Demontage erleichtert ist und eine zusätzliche Ermüdungsfestigkeit der Federn erzielt ist (z.B. durch eine Oberflächenhärtung und/oder durch ein Kugelstrahlen).

Die Merkmale der einzelnen beanspruchten bzw. beschriebenen Gegenstände bzw. Verfahren sind ohne Weiteres miteinander kombinierbar. Im Folgenden wird die Erfindung beispielhaft anhand von Figuren näher dargestellt und erläutert. Die in den Figuren gezeigten Merkmale können zu neuen Ausführungsformen kombiniert werden, ohne die Erfindung zu verlassen. Gleichartige Elemente bekommen das gleiche Bezugszeichen. Es zeigen:
- FIG 1: zwei Diagramme zu Frequenzverhalten elektrischer Maschinen,
- FIG 2: einen Teilquerschnitt eines Quetschöldämpfers in einem Lagergehäuse und
- FIG 3: eine perspektivische Darstellung eines Quetschöldämpfers.

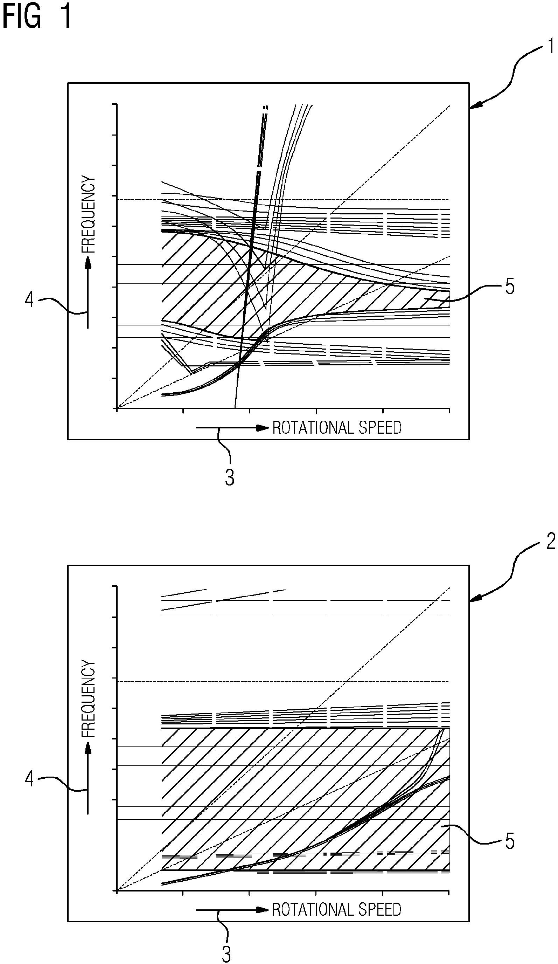

Die Darstellung nach FIG 1 zeigt ein erstes Diagramm 1 und ein zweites Diagramm 2, wobei beide Diagramme ein Frequenzverhalten über eine Drehzahl darstellen. Die Drehzahl ist auf einer Achse 3 aufgetragen und die Frequenz auf einer Achse 4. Die Frequenz betrifft das System von Rotor, Lager und Support (Unterbau). Zur Messung dieser Frequenz kann ein Sensor beispielsweise auf einem Rotor oder einem Lagergehäuse angebracht werden. Die Frequenz kann aber auch eine Relativbewegung zwischen Lager und Rotor betreffen. Die Drehzahl betrifft die Umdrehungen eines Rotors einer elektrischen Maschine oder eines Lagers einer elektrischen Maschine. Eine schraffierte Fläche 5 zeigt in den Diagrammen jeweils einen Bereich sicheren Verhaltens, so dass Eigenfrequenzen nicht angeregt werden. Das linke Diagramm 1 betrifft ein System, welches ein Gleitlager aufweist. Das rechte Diagramm 2 betrifft ein System, welches ein Gleitlager mit einem Quetschöldämpfer aufweist. Es ist ersichtlich, dass durch den Einsatz des Quetschöldämpfers der Bereich eines sicheren Betriebes des Systems erhöht ist. Das System weist zumindest eine elektrische Maschine mit einem gelagerten Rotor auf.

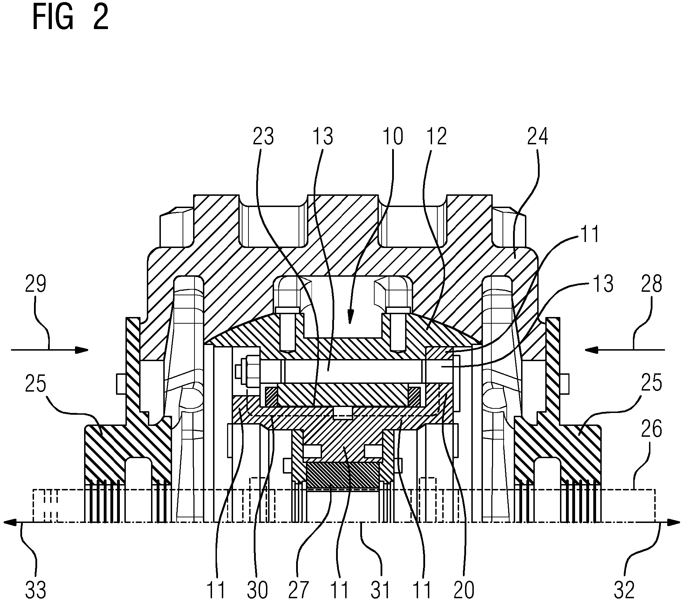

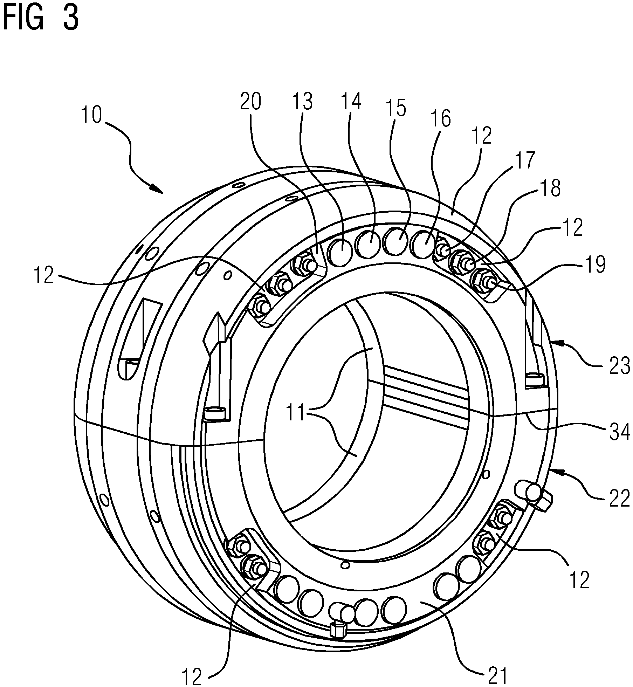

Die Darstellung nach FIG 2 zeigt einen Teilquerschnitt eines Quetschöldämpfers 10 in einem Lagergehäuse 24. Der Quetschöldämpfer 10 weist einen Innenring 11 und einen Außenring 12 auf. Der Innenring 11 des Quetschöldämpfers 10 dient als ein Gleitlagerträger. Das Gleitlager meist ein Gleitlagersegment 27 bzw. eine Vielzahl von Gleitlagersegmenten auf. Das Gleitlager dient zur Lagerung eines Rotors 26 bzw. einer Rotorwelle einer elektrischen Maschine, welche im Detail nicht dargestellt ist. Die Rotorwelle 26 weist eine Achse 31 auf wobei eine erste Achsrichtung 32 und eine zweite Achsrichtung 33 dargestellt sind. Der Innenring 11 bildet durch auf den unterschiedlichen Stirnseiten sich abwechselnden Positionen von Zähnen ein U-förmiges Profil 30 aus, in welches der Außenring 12 ragt. Durch das U-förmige Profil 30 bilden sich auf den Stirnseiten 28 und 29 des Innenrings 11 gegenüberliegende gezahnte Flansche 20 aus, welche bezüglich der unterschiedlichen Stirnseiten zueinander in ihrer Winkelposition versetzt sind. Der jeweilige stirnseitige Flansch 20 weist Zähne 20 auf. Zähne 20 gegenüberliegender stirnseitiger Flansche sind also über einen Kreisbogen versetzt, wechseln sich also gegenseitig gegenüberliegend über einen Kreis ab. So kann durch einen Stab 13, bzw. durch eine Vielzahl von Stäben, wie diese in Figur 3 dargestellt sind, abwechselnd der Außenring 12 in eine erste Richtung 32 zum Innenring 11 gezogen bzw. variabel positioniert werden und durch einen weiteren Stab (in FIG 2 nicht dargestellt) in eine entgegengesetzte zweite Richtung 33 gezogen bzw. variabel positioniert werden. Damit ergibt sich eine Verspannung bzw. Positionierung von Innenring 11 und Außenring 12. Zwischen dem Innenring 11 und dem Außenring 12 befindet sich ein Quetschöldämpferspalt 23. Über Dichtungen 25 ist das Lagergehäuse 24 abgedichtet.

Die Darstellung nach FIG 3 zeigt eine perspektivische Darstellung eines Quetschöldämpfers 10. Der Quetschöldämpfer 10 weist einen unteren Teilkreis (Teil) 22 und einen oberen Teilkreis (Teil) 23 auf. Der untere Teil 22 ist mit dem oberen Teil 23 lösbar verschraubt. Zwischen den Teilen 11 und 12 ist eine Lagerteilfuge 34 ausgebildet. Der durch die Stäbe sich ausbildende Käfig ist also durch die Lagerteilfuge 34 in zwei Hälften geteilt. Dies kann zur einfachen Demontage genutzt und/oder zur Einbringung eines Offsets und damit einer Vorspannung. Der sichtbare stirnseitige Flansch des Innenrings weist Zähne 20 und 21 auf. Durch diese Zähne 20 sind Stäbe 13, 14, 15, 16 als eine Gruppe von Zähnen geführt, welche den Außenring 12 mit dem Innenring 11 verbinden. Neben dem Zahn 20 sind Stäbe 17, 18 und 19, welche von der anderen gegenüberliegenden nicht sichtbaren Stirnseite des Innenrings 11 den Innenring 11 mit dem Außenring 12 verbinden. Die Stäbe bilden eine Federwirkung aus und können damit auch als Stabfedern bezeichnet werden. Die Gruppen von Stäben sind verschränkt. Die Darstellung nach FIG 2 und FIG 3 zeigt beispielhaft einen Gleitlagereinsatz mit Lagerschalen mit einem integrierten Quetschöldämpfer.

## Patentansprüche

1. Quetschöldämpfer (10), welcher einen Innenring (11) und einen Außenring (12) aufweist, wobei der Innenring (11) und der Außenring (12) zueinander verspannbar und/oder variabel positionierbar sind.

2. Quetschöldämpfer (10), nach Anspruch 1, wobei Stäbe (13,14,15,16,17,18,19) zur Verbindung des Innenrings (11) mit dem Außenring (12) vorgesehen sind, wobei der Innenring (11) zum Außenring (12) durch die Stäbe (13,14,15,16,17,18,19) insbesondere axial verspannt ist.

3. Quetschöldämpfer (10) nach Anspruch 1 oder 2, wobei der Innenring (11) und/oder der Außenring (12) ein offener Ring und/oder ein geschlossener Ring sind, wobei insbesondere offene Ringe zu einem geschlossenen Ring fügbar sind.

4. Quetschöldämpfer (10) nach einem der Ansprüche 1 bis 3, wobei der Innenring (11) und/oder der Außenring (12) teilbar sind.

5. Quetschöldämpfer (10) nach einem der Ansprüche 2 bis 4, wobei eine erste Anzahl von Stäben (13,14,15,16,17,18,19) den Außenring (12) in eine erste axiale Zugrichtung zieht und eine zweite Anzahl von Stäben (13,14,15,16,17,18,19) den Außenring (12) in eine zweite axiale Zugrichtung zieht, wobei sich Stäbe (13,14,15,16,17,18,19) und oder Gruppen von Stäben (13,14,15,16) (17,18,19) unterschiedlicher Zugrichtungen abwechseln.

6. Quetschöldämpfer (10) nach einem der Ansprüche 2 bis 5, wobei Stäbe (13,14,15,16,17,18,19) eine Oberflächenschicht aufweisen.

7. Quetschöldämpfer (10) nach einem der Ansprüche 2 bis 6, wobei Stäbe unterschiedliche Materialien aufweisen.

8. Quetschöldämpfer (10) nach einem der Ansprüche 1 bis 7, wobei der Innenring (11) ein U-förmiges Profil (30) aufweist und wobei der Außenring (12) zumindest teilweise in das Profil (30) ragt, oder wobei der Außenring (11) ein U-förmiges Profil (30) aufweist und wobei der Innenring (12) zumindest teilweise in das Profil (30) ragt.

9. Quetschöldämpfer (10) nach einem der Ansprüche 1 bis 8, wobei der Quetschöldämpfer für ein Lager (27) vorgesehen ist, wobei das Lager (27) insbesondere ein Gleitlager (27) ist.

10. Quetschöldämpfer (10) nach einem der Ansprüche 1 bis 9, wobei der Quetschöldämpfer (10) in ein Lagergehäuse (24) integrierbar ist.

11. Quetschöldämpfer (10) nach einem der Ansprüche 1 bis 10, wobei die Verspannung anpassbar ist.

12. Quetschöldämpfer (10) nach einem der Ansprüche 2 bis 11, wobei zumindest ein Stab (13,14,15,16,17,18,19) austauschbar ist und/oder wobei zumindest ein Stab (13,14,15,16,17,18,19) eine Federwirkung aufweist.

13. Verfahren zur Erstellung eines Quetschöldämpfers (10), wobei Elemente des Quetschöldämpfers (10) verspannt werden und/oder variabel positioniert werden, wobei ein erstes Element ein Innenring (11) ist und ein zweites Element ein Au-βenring (12) ist.

14. Verfahren nach Anspruch 13, wobei zur Veränderung einer Federwirkung zumindest ein Stab ausgetauscht wird und/oder zumindest bei einem Stab (13,14,15,16,17,18,19) eine Vorspannung verändert wird und/oder eine wirksame Länge eines Stabes (13,14,15,16,17,18,19) verändert wird.

15. Verfahren nach Anspruch 13 oder 14, wobei ein Quetschöldämpfer (10) nach einem der Ansprüche 1 bis 11 verwendet wird.
